# EUROPEAN PATENT APPLICATION

(11) **EP 1 650 133 A1**
(43) Date of publication of application: **26.04.2006**
(21) Application number: 04024811.4
(22) Date of filing: 19.10.2004
(51) Int. Cl.: B65D 21/08, A23G 9/00, B65D 85/78, A23G 9/20, A23G 9/28

(54) **Squeezable assembly for pasty products**

(71) Applicant: NESTEC S.A., 1800 Vevey (CH)
(72) Inventor: Bertini,Stefano, 43029 Vignale di Traversetolo Parma (IT); Ambrogi, Mario, 43056 S.Polo di Torrile Parma (IT); Schlegel, Myriam, 6000 Fouquenies (FR); Vieira, Josélio Batista, 95290 L'Isle-Adam (FR); Funnel, Bruce, 60930 Bailleul-sur-Therain (FR)
(74) Representative: Archambault, Jean

(57) **Abstract**

A squeezable assembly (1) for shelf-stable, chilled or frozen pasty products comprising
- a body (2) formed by a tube or a container presenting a bottom (3), lateral walls and a rim (12) in the accordion form (15),
- a rigid plastic cap (13) attached to the end of the tube or the rim (12) of the container comprising an aperture,
- a cover seal (14) to close the aperture (16) and
- a product contained in the assembly (1)

## Description

### Fied of the invention

The present invention concerns a squeezable assembly for pasty products.

### Background of the invention

It is already known on the market assembly which have a body and a piston for extruding the product contained in said body. The problem with such a solution is that the body and the piston are both rigid and represents a big amount of material for the packaging. One of the objectives of the to-day packagings is that for decreasing the price, it is necessary to decrease the weight of material used for said packagings.

The objective of the present invention is to develop an assembly , wherein the material's quantity is decreased without any drawback on the resistance of said final assembly.

There is need for providing packed frozen aerated confections wherein the package is sufficiently resistant to allow for extracting the soft frozen aerated confection portion at - 18° C or lower without breaking, is easily collapsible, leaves very little product inside it after the product has been extruded therefrom and in the same time uses a very small amount of packaging material.

Inside the ice cream there are ice crystals and air bubbles dispersed in a liquid phase. Softness generally is obtained by reducing the quantity of ice formed and this is mainly obtained by selecting the type and the amount of sugars, by adding salt or alkohol in the ice cream mix. There is some limitation in the possibilities to play with the low molecular components mentioned above for taste reasons. Thus, if further increase of softness is targeted, the only possibility is to use polyols, e.g. glycerol.

### Summary of the invention

The present invention concerns a squeezable assembly for shelf-stable, chilled or frozen pasty products comprising
- a body formed by a tube or a container presenting a bottom, lateral walls and a rim in the accordion form,
- a rigid plastic cap attached to the end of the tube or the rim of the container comprising an aperture,
- a cover seal to close the aperture and
- a product contained in the assembly.

According to the invention, it is important that the product is a pasty product. The product contained in the assembly is a shelf-stable product, like for example a mayonnaise. Concerning chilled product, it is possible to have in the assembly of the invention a dairy product, like a yoghurt. Most preferably, according to the invention, the product is a frozen product. More particularly, it is an ice-cream and more particularly a soft ice.

More particularly, the present invention is related to a cartridge containing a frozen aerated confection with high softness at - 18° C which can be extruded from the said cartridge at that temperature or lower.

The present invention thus concerns in particular a packed aerated frozen confection which comprises:
- a cartridge and
- a frozen aerated confection which is soft at storage temperature of - 18° C or less, and the soft frozen confection comprises by weight:
   50 to 70 % water,
   5 to 20 % fat,
   0 to 5 % polyol,
   the balance being sugars, milk proteins, hydrocolloids and emulsifiers and
   has an overrun of 20 to 150 %.

### Detailed description of the invention

Preferably, the soft frozen confection contains 2 to 8 % by weight proteins. Preferably the proteins are of milk origin and come from liquid skimmed milk, skimmed milk powder and whey powder, optionally recombined in water. Preferably, the protein source should undergo only one pasteurisation step in order to minimize thermal denaturation of proteins. Thus milk solid non fat aid in providing the desirable properties of whipability, smoothness, body and melt resistance.

In the context of the invention, a suitable polyol can be selected from the group consisting of sorbitol, mannitol, lactilol, xylitol, maltitol and glycerol, glycerol being preferred. The role of polyol is to further soften the frozen confection by making it sufficiently soft to be scoopable at home freezer temperature of - 18° C or less, so that it can be extracted from the pakage at that temperature. It is used to increase softness because it reduces ice content with less sweetening effect that sucrose.

Preferably, glycerol is used at a level of 0.5 to 2 % by weight.

The soft frozen confection preferably contains Vegetable fibres may be added which can preferably be selected from the group consisting of oat fibres, fibres extracted from chicory taproots and fibregum from Acacia tree. Preferably they consist in fructo-oligosaccharides, most preferably they are inulin-oligofructoses extracted from chicory. Most preferably, inulin-oligofructoses are used at a level of 2 to 4 % by weight. We have found that it has a strong effect to prevent shrinkage and ice layering, also in the presence of glycerol.

Preferably, the product of the invention comprises sweetener ingredients which are a combination of sucrose, dextrose and glucose sirup, preferably from corn syrup solids, preferably of high dextrose equivalent (DE), from DE 40 to DE 60 or more that provide a desired level of sweetness and texture and decrease the freezing point of the mixture.

The fat may be of milk or vegetable origin and its level may be within a broad range. If less fat is used in combination with a polyol and vegetable fibre, it is then possible to manufacture a cheaper ice cream or an ice cream which is more dietetic with the same softness as a regular high fat ice cream .

Another advantage achieved by the soft frozen composition is that live probiotic lactic acid bacteria, can be incorporated, e.g. in encapsulated form or in the form of separately cultured portion of the milk solid non fat which is added to the mix, in this latter case after pasteurisation. These probiotic bacteria can thus act in combination with the fermentescible prebiotic vegetable fibres to provide upon consumption a beneficial positive influence on the development of the intestinal flora with the consumer.

The frozen confections may comprise an emulsifier, preferably propylene glycol monoester of fatty acid is used as a primary emulsifier in an amount of 0.2 to 0.5 % and most preferably in an amount of at least 0.26 %. Preferably propylene glycol monostearate/palmitate is used.

The frozen confections may optionally comprise one additional emulsifier, for example, unsaturated monoglyceride or saturated mono-di glyceride in an amount of at least 5 % of the total emulsifiers, preferably in an amount of 0.04 to 0.16 % by weight as partial replacement of propylene glycol monoester of fatty acid.

The frozen confections may comprise stabilizing agents; these may include carob flour, guar flour, alginates, carboxymethyl cellulose, xanthan, carrageenan, gelatin, starches used alone or in the form of a mixture at a dose of 0.1 to 0.5 % by weight, preferably about 0.25 %.

The formulation of the product in the invention may in addition comprise colourings such as beta-carotene, for example, and/or any type of flavourings or perfumes customarily used to flavour frozen confections, such as vanilla, strawberry or chocolate for example.

The compositions used in the invention may optionally comprise additions such as fruit or fruit pieces, for example, or nuts, or hazelnuts, whole or in pieces, for example.

Furthermore, the organoleptic qualities of the frozen compositions are not reduced compared with the traditional products. Thus, the characteristics of smoothness and creaminess are increased and in particular, better preserved during the period of storage. In the frozen confections, it is the use of propylene glycol monoester of fatty acid, as emulsifier which makes it possible in addition to reduce remarkably the growth of water crystals in the products subjected to heat shock and thus it confers greater stability to heat shocks on the product.

### Size of the ice crystals in an ice confection

An aliquot of ice confection is mixed with an equivalent quantity of glycerol and observed under a microscope at a temperature of -10° C. The measurement may be carried out in a chamber at -10° C equipped with microscope and a camera. It is thus possible to measure the mean diameter of the crystals (in µm) in the finished products and in the products which have been subjected to a heat shock (microscope magnification 129).

The frozen confections exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

The expression "reduced crystal growth" is understood to mean an increase in the mean diameter of the ice crystals of less than 50 % after heat shock .

Preferably, the freezing step is carried out in a scraped surface freezer at a draw temperature at the freezer outlet of - 5 to - 10° C, most preferably at a draw temperature as low as possible of about - 9 to - 10° C.

After freezing, the frozen confection can be packed into the cartridges and hardened to storage temperature of - 18° C or less, for example - 30° C.

Alternatively, following freezing, the frozen confection can be further cooled under shear to lower temperatures of - 18° C or less with the aid of a cold extrusion device such as a twin screw extruder and filled into the cartridges.

Another objective of the invention is to have an assembly, wherein the extrusion of the product is convenient for the consumer, that means with a device, which is relatively simple and therefore not expensive.

According to the invention, the tube or the container is made from a plastic material taken from the group consisting of Polystyrene,Polyethylene, Polyactic acid, Polyethylen Terephthalate, Polypropylene, blend and coextrusion of different plastics aimed to increase the oxygen barrier or any folding properties of said main container.

The plastic material of the tube is preferably Polyethylen Terephthalate and the wall of said tube has a thickness comprised between 30 and 100 µm. More specifically, the thickness of the wall of the tube is comprised between 30 and 70 µm.

The production process for the tube is thermoforming combined with blow moulding. Normally, by thermoforming, it is not possible to produce a tube longer thant the diameter of said tube. By combining the blowforming step with thermoforming it is possible to achieve a much longer tube, whilst maintaining an even wall thickness.

The plastic material of the container is preferably Polyethylen and said container has a wall thickness comprised between 30 and 500 µm. More specifically, the thickness of the wall is comprised between 100 and 300 µm. The polyethylen is preferably high density.

The container is manufactured according to the Form-Fill-Seal technology. This technology is based on different types of machines , for example from Erca, Bosch , Hassia, wherein a main container is manufactured from a material roll going through a heating box, through a forming tool, through a station disposing the rigid means, a filling station and finally the sealing of a plastic cap is carried out on the main container. The forming tool has opening moulds.

The Polyethylen Terephthalate is preferably a semi-crystalline Polyethylen Terephthalate (PET). Semi-crystalline PET means in the present specification a PET having a cristallinity comprised between 10 and 60 %. More preferably , the crystallinity is comprised between 20 and 40 %.

The measure of the crystallinity is made on a density column from Lloyd-Davenport, according to following procedure. The column is filled with a salted solution (calcium nitrate) having a density gradient. The column is calibrated with balls having known density between 1.335 and 1.455. Then small pieces of the container of the invention are immerged in the column and after a certain time, they stay at a certain height of the column corresponding to a certain density.The measures are made at 23 °C.The following correspondance table with ρ_{c} of 1.455 gives the cristallinity

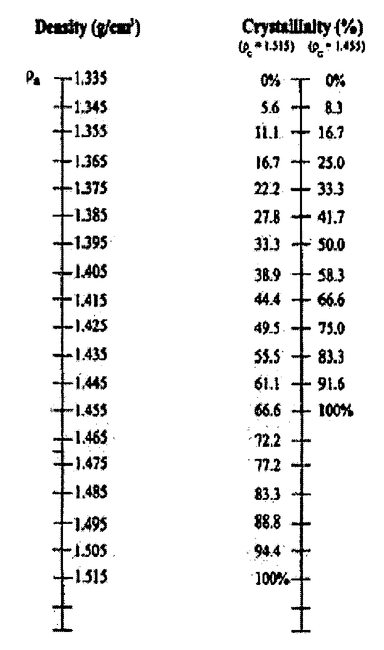

The rigid plastic cap has a thickness comprised between 500 and 2000 µm. The aperture on the rigid plastic cap has the form of a star or any other shape.

The rigid plastic cap is in a material taken from the group consisting of Polystyrene,Polyethylene, Polyactic acid, Polyethylen Terephthalate, Polypropylene, blend and coextrusion of different plastics aimed to increase the oxygen barrier or any folding properties of said main container.

The cover seal finally is made in the same material as for the rigid plastic cap. The cover seal has a thickness comprised between 30 and 100 pm.

The volume of the tube or the container is comprised between 30 and 250 ml.

The attachment of the tube or the container to the rigid plastic cap can be carried out according to different techniques. The most common way is to proceed by welding, typically by ultrasonic means, by heat sealing means or by spin welding. This last technique involves bringing the cap and tube together and spinning the cap against the tube to create a friction between the two materials, which in turn creates sufficient heat to weld. By welding, it is easier to weld same material together. Therefore, in the case of a tube in PET, it is preferred to weld a rigid plastic cap in PEZ. In the case of a container in Polyethylen, it is preferred to weld a plastic cap also in Polyethylen.

According to another feature of the invention, said invention concerns a squeezable assembly for frozen pasty products comprising
- a container presenting a bottom, lateral walls and a neck with an opening,
- a closing means to close the opening and
- a frozen product contained in the assembly.
   In this assembly, the frozen product is ice-cream and more specifically soft ice-cream. As already mentioned before, the container is preferably a semi-crystalline Polyethylen Terephthalate (PET), as defined above.
   Concerning the closing means, every type of closing means known in the technique can be used, like a sealed membrane or a screw cap.
   The walls of the container have a thickness comprised between 30 and 100 µm. The volume of the container is comprised between 0.3 and 6 liters.
   The tube and the container comprises normally oxygen barrier, like Polyvinylidene Chloride (PVDC) or Ethylene Vinyl Alcohol Copolymer (EVOH).
   The invention finally concerns a process for the manufacture of a squeezable assembly according to the invention, wherein
- each tube or container is disposed in a conveyor pocket
- the product is filled in each tube or container and
- each tube or container is closed with the plastic cap comprising the cover seal or with the closing means, wherein the extruding of the product is carried out on the same side as the filling.
   The extrusion of the product will be more clearly described in relation with the following figures.

### Detailed description of preferred embodiments

The present invention will be further illustrated in the following examples wherein, unless indicated otherwise, the percentages are by weight.

The overrun is expressed as a percentage by volume and defined as the percentage by which the volume of the liquid mix for a product is increased with air during whipping and freezing.

### Examples

### Examples 1 to 4

Ice confections are formulated and produced according to the following processing conditions:
Vegetable fibre when used is mixed with some sugar or predispersed in some water at temperature of 45° C and added with all the powdery ingredients to liquid ingredients and glycerol in an agitated mixing tank.
Once all ingredients have been thoroughly blended together, the mixture was heated at 65° C for 20 min. in order to hydrate the hydrocolloids.
For pasteurisation, the mixture is then heated to a temperature of 87° C for 24 s. to achieve satisfactory treatment to confrm public health requirements and also avoiding as much as possible any significant denaturation of proteins.
The mixture is then subjected to an homogenisation stage to reduce the dimensions of the fat droplets, by homogenising the mixture at a pressure of 120 to 160 bar, at a temperature of 70 to 85° C. The homogenised mix is rapidly cooled to chill temperatures, typically 4° C and then aged by holding it for 4 to 12 h at that temperature.
The mixture is frozen using ice cream continuous freezer known as scraped surface heat exchangers where it is aerated by incorporating sufficient air to give the desired overrun. The ice confections were frozen down to draw temperatures lower than - 6° C, typically of - 8 to - 10° C. Sauce and inclusions can be added.

After being extruded and packed into the cartridges, the products are subjected to hardening in a hardening tunnel and stored at - 30° C.
Formulations of examples 1-4 indicated in table 1 below concern the ice creams without the sauce and inclusions.

**Table 1**

| Component | Composition % | | | |
|---|---|---|---|---|
| | Example 1 | Example 2 | Example 3 | Example 4 |
| Fat (cocoa fat and monodi-glyceride excluded) | 6, 1 | 5,6 | 5, 1 | 14,5 |
| Non-fat milk solids (from liquid skim milk and skim milk powder) | 5,6 | 4,7 | 6,3 | 5,5 |
| Whey solids | 2,9 | 1,9 | 2,4 | 1,9 |
| Sucrose | 6,5 | 6,5 | 12 | 8 |
| Corn syrup solids (DE=60, 80 % solids) | 15,2 | 11,2 | 7,2 | 0,8 |
| Dextrose | 0,9 | 6,4 | 1,8 | 6,9 |
| Locust bean gum | 0,18 | 0,12 | 0,2 | 0,1 |
| Guar gum | 0,09 | 0,06 | 0,1 | 0,05 |
| Carrageenan | 0,03 | 0,03 | 0,03 | 0,03 |
| Mono- diglycerides | 0,2 | 0,2 | 0,2 | 0,4 |
| Glycerol | 2,5 | 3 | 1 | 5 |
| Vegetable fibre (Inulin, Fibruline®, Cosucra) | 1,9 | 1,4 | 2,9 | 5,8 |
| Cocoa powder | - - - | 5,3 | - - - | - - - |
| Water | 57,9 | 53,6 | 60,8 | 51 |
| Total solids | 42,1 | 46,4 | 39,2 | 49 |

The products of examples 1 to 4 are very soft. Their overrun is 143-147 %. They can easily be extracted from the cartridges at - 18° C.

### Example 5

### Example 5, comparative example 5: use of PEFA in the presence of freezing point depressing sugars

The objective of these examples is to produce soft aerated frozen confections with freezing point depressing sugars showing texture and sensory attributes which are comparable to a conventional product made with conventional ingredients currently used in the aerated frozen dessert preparation.

To evaluate the remarkable properties of the emulsifier applied, various textural, microscopic and macroscopic tests may be carried out.

Standard heat shock: the samples initially stored at -30° C are subjected, for 7 days, to temperature cycles of -8° C/12h followed by -20° C/12h. After 7 days of stabilisation at -30° C, the melting parameters are evaluated for these samples which were subjected to a heat shock.
We were surprised to find that the use of polyol esters of fatty acids (PEFA), preferable propylene glycol monostearate (PGMS) alone or in combination with other food-grade emulsifiers, such as unsaturated monoglyceride, produces aerated frozen products with outstanding texture properties and with good heat shock stability.

An example of frozen confections made according to the present invention and comparative example are produced according to the formulations indicated in Table 2 below.

The various ingredients are dispersed at 65° C and then undergo a hydration step at 60° C for 20 minutes. The mixture is then homogenized at 180 bar with the aid of homogenizer and then pasteurized at 86° C for 32 s. After cooling to 4° C, the mixture is aged for 24 hours at 4° C, without stirring. Finally, the mixture is frozen at about -7.5° C draw temperature (example 5) and at about -5.7° C draw temperature (comparative example 5) with a degree of overrun of about 100 %. The ice confection obtained is hardened at -30° C by conventional means.

**Table 2**

| Ingredient | Ex. 5 | CompE x. 5 |
|---|---|---|
| Vegetable lauric fat blend | 9 | 9 |
| Sweet whey powder (SWP) | 10 | 10 |
| PGMS | 0.3 | 0 |
| UMG | 0.08 | 0.08 |
| SMDG | 0 | 0.3 |
| Stabilizers | 0.2 | 0.25 |
| Sucrose | 1 | 14 |
| Glucose syrup | 6.5 | 3 |
| Dextrose | 11 | 0 |
| Water | 61.92 | 63.37 |
| Total solids % | 36.0 | 36.4 |
| Calculated freezing point (° C) | -3.01 | -2.3 |

| | | |
|---|---|---|
| Vegetable lauric fat blend: Blend of palm and palm kernel oil; | | |
| Sweet whey powder: whey proteins, non demineralised from Euroserum, 10 to 12 % protein; | | |
| Skim milk powder from BBA; | | |
| PGMS: Propylene glycol monostearate PGMS SPV® from Danisco; | | |
| UMG: Unsaturated monoglyceride DIMODAN UP/B® from Danisco; | | |
| SMDG: Saturated Mono-diglycerides: CREMODAN 60 Veg® from Danisco; | | |
| Stabilizers: Guar gum (Procol G2 from Habgen) or Sodium alginate (Manucol DM from ISP Alginates); | | |
| Glucose syrup: Glucose MD 40 from Roquette. | | |

The freezing point achieved in this examples is an average value, to keep a very soft product at a serving temperature below -18° C it can be necessary to decrease the freezing point down to -4.5° C. e.g. by addition of 2.5 % of ethanol (at 98 volume) or 4 % glycerol, based on the total composition of the recipe.
Table 3 below describes the measured mean ice crystal size of bot he recipes, example 5 and comparative example 5 after heat shock. Sample of example 5 which contains a blend of PGMS and UMG has smaller ice crystals and the crystals are significantly more resistant to growth following heat shock treatment compared to the other sample of comparative example 5.

**Table 3**

| Sample | Ice crystal size (µm) After heat schock |
|---|---|
| Example 5 | 30 |
| Comp. ex. 5 | 54.5 |

The heat shock samples were also evaluated for the texture attribute smoothness by a trained testing panel. The texture of the product of example 5 was showing a very high smoothness and the aspect was good.
We were surprised to find that with the use of polyol esters of fatty acids (PEFA), preferably PGMS alone or in combination with other food grade emulsifiers, such as unsaturated mono glyceride, we were able decrease the freezing point in aerated frozen products and keep the same smoothness and heat shock stability of a standard version.

Other features and advantages of the invention will become apparent from the description which follows, given by way of example and with reference to the appended drawings in which :
Fig. 1 is a schematic cross section of the assembly with a tube,
Fig. 2 is a schematic cross section of the assembly with an accordion container,
Fig. 3 is a schematic cross section of the device for extruding the assembly of figure 1,
Fig. 4 is a schematic cross section of the device for extruding the assembly of figure 2,
Fig. 5 is a schematic cross section of the device for extruding the assembly , according to another embodiment of said assembly and
Fig. 6 is a schematic cross section for extruding a big volume assembly.

The assembly (1) contains a soft ice-cream (2), said assembly comprising a tube (3), the opening side of the tube being welded in (7) to a rigid plastic cap (4). The welding has been carried out by ultrasonic sealing. The cap has an aperture (6) having the form of a star. This aperture is closed by sealing with a cover seal (5). The tube is made of Polyethylen Terephthalate having a thickness of 70 µm.

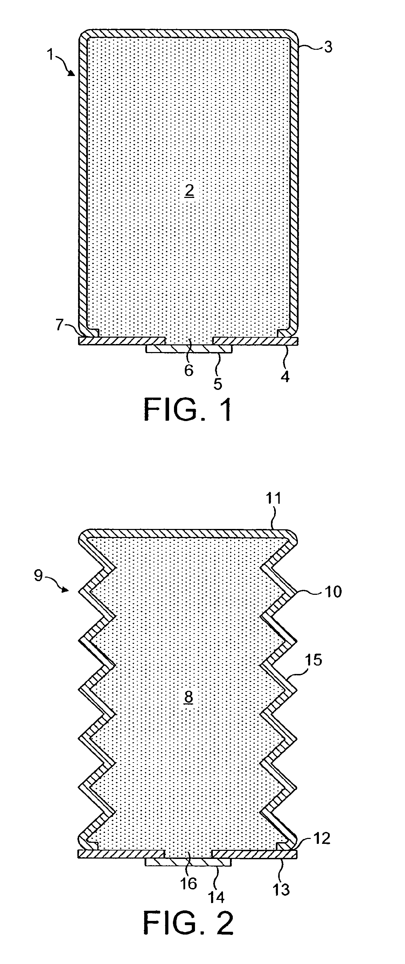

The assembly (9) of figure 2, comprises a container (10) having a bottom (11) and lateral walls (15) and a rim (12). This container is made of Polyethylen high density having a wall thickness of 150 µm. A rigid plastic cap (13) is welded against the rim of said container and a cover seal (14) is applied against the aperture (16) of said rigid plastic cap. The assembly contains a soft ice-cream (8).

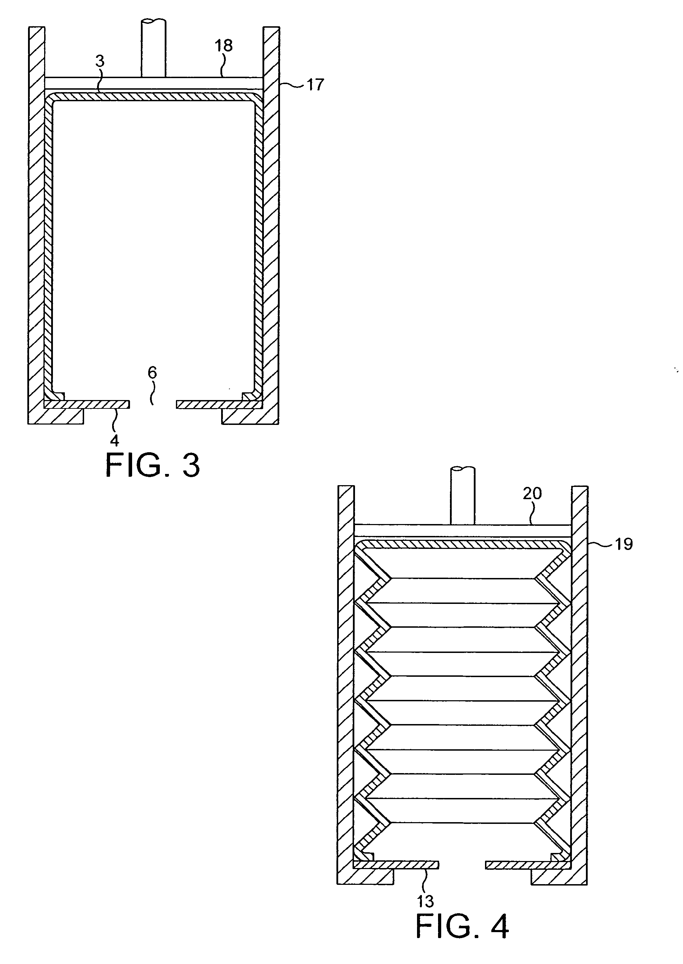

The figure 3 represents the way of extruding the product of the assembly of figure 1. The consumers removes the cover seal (5) and the assembly is placed into a cylindrical holder (17). The dispenser piston (18) is then applied to the closed end of the tube, thereby collapsing the tube and forcing the soft ice-cream out through the star shaped opening into a receiving vessel (cup, cone or other receptical)(not shown) below. Dispensing stops when the tube is fully collapsed and the piston meets the rigid end (4) of the assembly, thereby extruding all of the product contained within. At the end, the piston is returned to ist start position.

The figure 4 represents the way of extruding the product of the assembly of figure 2. The consumers removes the cover seal (14) and the assembly is placed into a cylindrical holder (19). The dispenser piston (20) is then applied to the bottom (11) of the container (10), thereby collapsing said container and forcing the soft ice-cream out through the star shaped opening into a receiving vessel (cup, cone or other receptical)(not shown) below. Dispensing stops when the container is fully collapsed and the piston meets the rigid end (13) of the assembly, thereby extruding all of the product contained within. At the end, the piston is returned to ist start position.

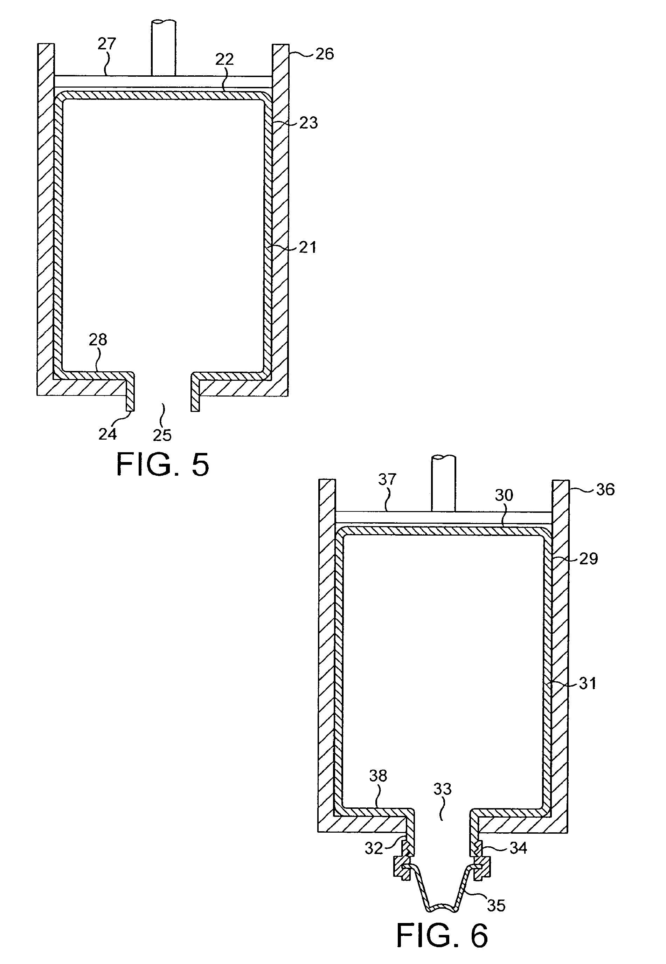

The figure 5 represents the way of extruding the product of an assembly comprising a container (21) presenting a bottom (22), lateral walls (23) and a neck (24) with an opening (25). This is the case of an assembly having a volume of soft ice-cream for a single serve. The consumers removes the sealed membrane (not shown) and the assembly is placed into a cylindrical holder (26). The dispenser piston (27) is then applied to the closed end of the tube, thereby collapsing the assembly and forcing the soft ice-cream out through the star shaped opening into a receiving vessel (cup, cone or other receptical)(not shown) below. The piston stops when the assembly is fully collapsed and the piston meets the shoulder (28) of the assembly, thereby extruding all of the product contained within. At the end, the piston is returned to ist start position.

The figure 6 represents the way of extruding the product of an assembly comprising a container (29) presenting a bottom (30), lateral walls (31) and a neck (32) with an opening (33). The consumers removes the sealing membrane (not shown) and puts on the neck a screw part (34) to fix a valve (35) on said assembly. The assembly is placed into a cylindrical holder (36). The dispenser piston (37) is then applied to the bottom (30) of the assembly, thereby collapsing the container and forcing the soft ice-cream out through the star shaped opening into a receiving vessel (cup, cone or other receptical)(not shown) below. Dispensing stops when the tube is fully collapsed and the piston meets the shoulder (38) of the assembly, thereby extruding all of the product contained within. At the end, the piston is returned to ist start position.

## Claims

1. A squeezable assembly for shelf-stable, chilled or frozen pasty products comprising
- a body formed by a tube or a container presenting a bottom, lateral walls and a rim in the accordion form,
- a rigid plastic cap attached to the end of the tube or the rim of the container comprising an aperture,
- a cover seal to close the aperture and
- a product contained in the assembly.

2. A squeezable assembly according to claim 1, wherein the tube or the container is made from a plastic material taken from the group consisting of Polystyrene,Polyethylene, Polyactic acid, Polyethylen Terephthalate, Polypropylene, blend and coextrusion of different plastics aimed to increase the oxygen barrier or any folding properties of said main container.

3. A squeezable assembly according to claim 2, wherein the plastic material of the tube is Polyethylen Terephthalate and the wall of said tube has a thickness comprised between 30 and 100 µm.

4. A squeezable assembly according to claim 2, wherein the plastic material of the container is Polyethylen and said container has a wall thickness comprised between 30 and 500 µm.

5. An assembly according to claim 3 , wherein the Polyethylen Terephthalate is a semi-crystalline Polyethylen Terephthalate.

6. An assembly according to any of claims 1 to 5, wherein the rigid plastic cap is in a material taken from the group consisting of Polystyrene,Polyethylene, Polyactic acid, Polyethylen Terephthalate, Polypropylene, blend and coextrusion of different plastics aimed to increase the oxygen barrier or any folding properties of said main container.

7. An assembly according to claim 6, wherein the rigid plastic cap has a thickness comprised between 500 and 2000 µm.

8. An assembly according to any of claims 1 to 7, wherein the aperture on the rigid plastic cap has the form of a star or any other shape.

9. An assembly according to any of claims 1 to 8, wherein the cover seal is in a material taken from the group consisting of Polystyrene,Polyethylene, Polyactic acid, Polyethylen Terephthalate, Polypropylene, blend and coextrusion of different plastics aimed to increase the oxygen barrier or any folding properties of said main container.

10. An assembly according to claim 9, wherein the cover seal has a thickness comprised between 30 and 100 µm.

11. An assembly according to any of claims 1 to 10, wherein the product is a frozen product.

12. An assembly according to claim 11, wherein the frozen product is a soft ice-cream.

13. An assembly according to claim 11 wherein the frozen product is an aerated frozen confection which is soft at storage temperature of - 18° C or less, and wherein the soft frozen confection comprises by weight:
50 to 70 % water,
5 to 20 % fat,
0 to 5 % polyol,
the balance being sugars, milk proteins, hydrocolloids and emulsifiers and
has an overrun of 20 to 150 %.

14. An assembly according to Claim 13, in which the sugars comprise freezing point depressing sweeteners chosen from the group comprising sucrose, dextrose, fructose, glucose syrup, polydextrose, inulin or a mixture of these agents.

15. An assembly according to claim 14, in which the freezing point depressing sweeteners also comprise a suitable polyol selected from the group consisting of sorbitol, mannitol, lactilol, xylitol, maltitol, glycerol, ethanol and their mixtures, glycerol and ethanol being preferred, in order to further soften the frozen confection by making it sufficiently soft to be scoopable at home freezer temperature of - 18° C or less.

16. An assembly according to claim 13, in which polyol esters of fatty acids alone or in combination with other food grade emulsifiers is added as primary emulsifier in an amount of at least 0.2 % by weight in the preparation of an aerated frozen confection with improved texture and stability.

17. An assembly according to claim 16, which comprises other food-grade emulsifier selected from the group consisting of unsaturated monoglyceride, saturated mono-di glyceride and their mixtures in an amount of 0.04 to 0.16 % by weight in partial replacement of propylene glycol monoester of fatty acid.

18. An assembly according to claim 13, in which the aerated confection comprises at least one stabilizer chosen from the group comprising carob flour, guar flour, alginates, carboxymethyl cellulose, xanthan, carrageenan, gelatin, starches used alone or in the form of a mixture at a dose of 0.1 to 0.5 %, preferably about 0.25 % by weight.

19. An assembly according to any of claims 1 to 18, wherein the tube or the container have a volume comprised between 30 and 250 ml.

20. A squeezable assembly for frozen pasty products comprising
- a container presenting a bottom, lateral walls and a neck with an opening,
- a closing means to close the opening and
- a frozen product contained in the assembly.

21. A squeezable assembly according to claim 20, wherein the frozen product is soft ice-cream.

22. An assembly according to claim 21 wherein the frozen product is an aerated frozen confection which is soft at storage temperature of - 18° C or less, and wherein the soft frozen confection comprises by weight:
50 to 70 % water,
5 to 20 % fat,
0 to 5 % polyol,
the balance being sugars, milk proteins, hydrocolloids and emulsifiers and
has an overrun of 20 to 150 %.

23. An assembly according to Claim 22, in which the sugars comprise freezing point depressing sweeteners chosen from the group comprising sucrose, dextrose, fructose, glucose syrup, polydextrose, inulin or a mixture of these agents.

24. An assembly according to claim 23, in which the freezing point depressing sweeteners also comprise a suitable polyol selected from the group consisting of sorbitol, mannitol, lactilol, xylitol, maltitol, glycerol, ethanol and their mixtures, glycerol and ethanol being preferred, in order to further soften the frozen confection by making it sufficiently soft to be scoopable at home freezer temperature of - 18° C or less.

25. An assembly according to claim 22, in which polyol esters of fatty acids alone or in combination with other food grade emulsifiers is added as primary emulsifier in an amount of at least 0.2 % by weight in the preparation of an aerated frozen confection with improved texture and stability.

26. An assembly according to claim 25, which comprises other food-grade emulsifier selected from the group consisting of unsaturated monoglyceride, saturated mono-di glyceride and their mixtures in an amount of 0.04 to 0.16 % by weight in partial replacement of propylene glycol monoester of fatty acid.

27. An assembly according to claim 22, in which the aerated confection comprises at least one stabilizer chosen from the group comprising carob flour, guar flour, alginates, carboxymethyl cellulose, xanthan, carrageenan, gelatin, starches used alone or in the form of a mixture at a dose of 0.1 to 0.5 %, preferably about 0.25 % by weight.

28. A squeezable container according to any of claims 22 to 27, wherein the material of the container is a semi-crystalline Polyethylen Terephthalate.

29. A squeezable container according to claim 28, wherein the walls of the container have a thickness comprised between 30 and 100 µm.

30. A squeezable container according to claim 28, wherein the volume is comprised between 0.3 and 6 liters.

31. A process for the manufacture of a squeezable container according to any of claims 1 to 30, wherein
- each tube or container is disposed in a conveyor pocket
- the product is filled in each tube or container and
- each tube or container is closed with the plastic cap comprising the cover seal or with the closing means, wherein the extruding of the product is carried out on the same side as the filling.
